# EUROPEAN PATENT APPLICATION

(11) **EP 3 943 410 A1**
(43) Date of publication of application: **26.01.2022**
(21) Application number: 20772708.2
(22) Date of filing: 10.03.2020
(51) Int. Cl.: B65D 65/40, B65D 30/02

(54) **PACKAGING FILM AND POUCH CONTAINER**

(30) Priority: 20.03.2019 JP 2019053128
(71) Applicant: Fuji Seal International, Inc., Osaka-shi, Osaka 532-0003 (JP)
(72) Inventor: ONISHI Naoki, Osaka-shi, Osaka 532-0003 (JP); YAMAMOTO Atsushi, Osaka-shi, Osaka 532-0003 (JP); MIYAZAKI Akira, Osaka-shi, Osaka 532-0003 (JP)
(74) Representative: Winter, Brandl - Partnerschaft mbB
(86) International application number: PCT/JP2020/010152
(87) International publication number: WO 2020/189392

(57) **Abstract**

A packaging film of the present disclosure is a packaging film comprising a substrate layer (21), an aqueous colored ink layer (3), an intermediate layer (4), and a covering layer (22) layered in this order, wherein aqueous colored ink layer (3) comprises a binder resin and a coloring agent, and intermediate layer (4) comprises a curing agent having reactivity with the binder resin in aqueous colored ink layer (3). The packaging film having the aqueous colored ink layer excellent in both characteristics of water resistance and sticking tendency to the substrate layer is provided.

## Description

### TECHNICAL FIELD

The present invention relates to a packaging film used for forming a wrapping material, and others.

### BACKGROUND ART

Various articles such as foods including confectionery; cosmetics; and drugs have been wrapped in various wrapping materials and distributed so far. Among wrapping materials, soft wrapping materials such as pouch containers and pillow packaging bags are formed of flexible packaging films. To display a desired design, such as a trade name, a colored ink layer is printed on such packaging films. The colored ink layer is formed by printing a colored ink containing a binder resin and a coloring agent on a substrate such as a film. The colored ink is prepared by dissolved or dispersed the binder resin and others in a suitable solvent and adjusting the viscosity. Colored inks including organic resolvents as solvents and thus having resolvent volatility have been commonly and widely used for packaging films. When such colored inks having resolvent volatility are used, the resolvents have to be collected and appropriately treated in the printing process.

### CITATION LIST

### PATENT LITERATURE

PTL 1: Japanese Patent Laying-Open No. 5-271599

### SUMMARY OF INVENTION

### TECHNICAL PROBLEM

It is preferable to use an aqueous colored ink mainly in view of the environment. For example, PTL 1 (Japanese Patent Laying-Open No. 5-271599) discloses an aqueous gravure ink excellent in lamination strength. However, a packaging film also has many opportunities to be in contact with water, and a problem with the aqueous ink is, for example, that a colored ink layer comprising an aqueous ink spreads or is eluted due to water. Moreover, another problem is that the sticking tendency of an aqueous colored ink layer to a substrate such as a film is low as compared with the sticking tendency of a colored ink layer having a volatile resolvent.

An object of the present invention is to provide a packaging film having an aqueous colored ink layer excellent in both characteristics of water resistance and sticking tendency to a substrate layer and a pouch container using this film.

### SOLUTION TO PROBLEM

A packaging film of the present invention comprises a substrate layer, an aqueous colored ink layer, an intermediate layer, and a covering layer layered in this order. The aqueous colored ink layer is adjacent to the substrate layer and the intermediate layer. The aqueous colored ink layer comprises a binder resin and a coloring agent. The intermediate layer comprises a curing agent having reactivity with the binder resin in the aqueous colored ink layer.

In the packaging film of the present invention, the aqueous colored ink layer is preferably adjacent to the substrate layer and the intermediate layer.

In the packaging film of the present invention, the intermediate layer further comprises a binder resin, and the curing agent has reactivity with the binder resin of the intermediate layer.

In the packaging film of the present invention, the covering layer preferably comprises another substrate layer, and is adhered to the intermediate layer via an adhesive layer.

In the packaging film of the present invention, the covering layer preferably comprises a colorless and transparent ink layer.

A pouch container of the present invention is formed by using any of the above packaging films.

### ADVANTAGEOUS EFFECTS OF INVENTION

According to the present invention, a packaging film having an aqueous colored ink layer excellent in both characteristics of water resistance and sticking tendency to a substrate layer can be provided.

### BRIEF DESCRIPTION OF DRAWINGS

FIG. 1 is a partially omitted plane view showing a portion of the packaging film.
FIG. 2 is a schematic sectional view showing a first layered structure of the packaging film.
FIG. 3 is a schematic sectional view showing a second layered structure of the packaging film.
FIG. 4 is a schematic sectional view showing another example of the second layered structure of the packaging film.
FIG. 5 is a schematic sectional view showing a third layered structure of the packaging film.
FIG. 6 is a schematic sectional view showing another example of the third layered structure of the packaging film.
FIG. 7 is a perspective view of a pouch container.
FIG. 8 is a perspective view of a pillow packaging bag.
FIG. 9 is a sectional view of a label.

### DESCRIPTION OF EMBODIMENTS

Herein, a first surface refers to a surface on one side of a packaging film or each of layers constituting the packaging film, and a second surface refers to a surface on the opposite side thereto. The packaging film specifically has the first surface and the second surface on the side opposite to the first surface. The layers constituting a packaging film also have the first surface and the second surface on the opposite side to the first surface. The first surface of each of the layers is located on the first surface side of the packaging film, and the second surface of each of the layers is located on the second surface side of the packaging film. A numerical value range represented by "a lower limit value A to an upper limit value B" herein means the lower limit value A or more and the upper limit value B or less. When a plurality of the numerical value ranges is described separately, any lower limit value and any upper limit value can be selected, and "the any lower limit value to the any upper limit value" can be set. The sizes, the reduced scales, and the shapes of layers and members shown in figures may differ from actual sizes, reduced scales, and shapes. Hereinafter, an example of the present disclosure will be described with reference to the figures.

### <Summary of packaging film>

The packaging film of the present disclosure has a layered structure in which a substrate layer, an aqueous colored ink layer, an intermediate layer, and a covering layer are layered in this order. In other words, the packaging film of the present disclosure has the substrate layer, the aqueous colored ink layer provided on the first surface of the substrate layer, the intermediate layer provided on the first surface of the aqueous colored ink layer, and the covering layer provided on the first surface of the intermediate layer.

The aqueous colored ink layer contains a binder resin and a coloring agent. The intermediate layer contains a curing agent having reactivity with the binder resin of the aqueous colored ink layer. The intermediate layer further contains a binder resin preferably. In this case, the curing agent contained in the intermediate layer preferably has reactivity also with the binder resin contained in the intermediate layer. Hereinafter, the binder resin in the aqueous colored ink layer may be also referred to as an "aqueous ink resin", and the binder resin in the intermediate layer may be also referred to as an "intermediate layer resin". The first surface may be the front surface or the rear surface of the packaging film. The front surface side of the packaging film refers to a side mainly shown to consumers when the packaging film is processed into a wrapping material or the like.

The aqueous colored ink layer may be provided on at least the whole of the first surface or a part of the first surface of the substrate layer. The aqueous colored ink layer may be further provided on the whole or a part of the second surface of the substrate layer. In this case, an intermediate layer is further provided on the second surface of the aqueous colored ink layer provided on the second surface side preferably. The intermediate layer is provided on the first surface of the aqueous colored ink layer provided on the first surface of the substrate layer. The intermediate layer may be either transparent (colorless and transparent, or colored and transparent) or opaque. The intermediate layer may be provided so as to be laid at least on the first surface of the aqueous colored ink layer. For example, when the aqueous colored ink layer is provided on a part of the first surface of the substrate layer, the intermediate layer may be provided over the first surface of the aqueous colored ink layer and the first surface of the substrate layer (a surface on which the aqueous colored ink layer is not provided on the first surface of the substrate layer), or may be provided only on the first surface of the aqueous colored ink layer. The covering layer is provided on the first surface of the intermediate layer. Although the covering layer may be provided so as to be laid at least on the first surface of the intermediate layer, the covering layer is preferably provided so as to be laid on the whole substrate layer (in this preferable example, the covering layer and the essential substrate layer have the same shape and the same size in plane view).

The packaging film may have at least one substrate layer, or may have two or more substrate layers. When the packaging film has two or more substrate layers, the aqueous colored ink layer is provided at least on the whole or a part of the first surface of at least one substrate layer among those. When the packaging film has the plurality of (two or more) substrate layers, the aqueous colored ink layers may be provided on some substrate layers. Hereinafter, the substrate layers may be distinguished in the description of the substrate layers by referring substrate layers essentially provided with aqueous colored ink layers as "essential substrate layers" and referring the other substrate layers as "other substrate layers."

The packaging film may have an ink layer other than the aqueous colored ink layer, or may not have the other ink layer. Examples of the ink layers other than the aqueous colored ink layer include a colorless and transparent ink layer.

Here, the ink layer means an ink solidified layer formed by printing a desired ink. Although all of the substrate layer, the ink layer (an aqueous colored ink layer, a colorless and transparent ink layer, or the like), and the intermediate layer are layer-shaped, the substrate layer is different from the ink layer and the intermediate layer in that the substrate layer alone can form a layer. Specifically, the substrate layer can maintain the layer shape alone. In contrast, although the ink layer and the intermediate layer form layers in a state in which the ink layer and the intermediate layer attaches to the substrate layer (since the ink layer and the intermediate layer are supported by the substrate layer, the layers are formed), the ink layer and the intermediate layer are very fragile alone, are ruptured with slight force, and cannot maintain the layer shapes.

The packaging film is flexible. A packaging film having substantially no heat shrinkability is used. The heat shrinkability means the property of contracting when heated at a desired temperature (for example, 70°C to 90°C).

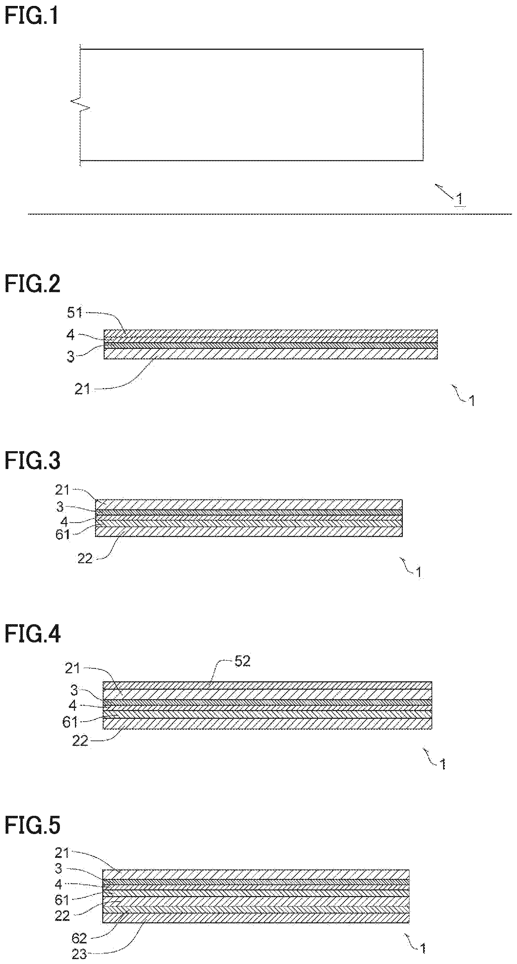

The shape of the packaging film in the plane view is a long band shape as shown in FIG. 1. The long band shape means a substantially rectangular shape in plane view wherein the longitudinal direction is enough longer than the transverse direction. For example, the length of the longitudinal direction is 3 times or more, preferably 5 times or more, longer than the length of the transverse direction. Examples of the specific size of the shape of the long band include the case where the transverse direction is 100 mm to 3000 mm, and the longitudinal direction is 2 m to 500 m. The packaging film formed in the long band shape is usually wound around a roll, stored and conveyed, and it is cut into a desired shape and used when a wrapping material or the like is manufactured. However, the shape of the packaging film of the present disclosure is not limited to the long band shape, and the packaging film may be in a sheet shape in plane view (not shown). Examples of the sheet shape include substantially polygonal shapes in plane view such as substantially quadrangular shapes, substantially triangular shapes, and substantially hexagonal shapes in plane view; and substantially circular shapes in plane view.

### <Examples of layered structure of packaging film>

Next, some layered structures of the packaging film of the present disclosure are illustrated with reference to FIGS. 2 to 4. Each packaging film in FIGS. 2 to 4 has a layered structure in which a substrate layer, an aqueous colored ink layer, an intermediate layer, and a covering layer are layered in this order.

A packaging film 1 in FIG. 2 has one substrate layer. With reference to FIG. 2, packaging film 1 has an essential substrate layer 21, an aqueous colored ink layer 3 provided on the front surface of essential substrate layer 21 (in this example, the front surface is the first surface), a transparent intermediate layer 4 provided on the front surface of aqueous colored ink layer 3, and a colorless and transparent ink layer 51 provided on the front surface of intermediate layer 4. In packaging film 1 in FIG. 2, colorless and transparent ink layer 51 corresponds to the covering layer. Although the first surface is a front surface, the first surface may be a rear surface. In this packaging films 1, since transparent intermediate layer 4 and colorless and transparent ink layer 51 (covering layer) are laid on the front surface of aqueous colored ink layer 3, the design of aqueous colored ink layer 3 can be confirmed visually at least from the front surface side of packaging film 1.

Each packaging film 1 in FIGS. 3 and 4 has two substrate layers. With reference to FIG. 3, packaging film 1 has essential substrate layer 21, aqueous colored ink layer 3 provided on the rear surface of essential substrate layer 21 (in this example, the rear surface is the first surface), intermediate layer 4 provided on the rear surface of aqueous colored ink layer 3, an adhesive layer 61 provided on the rear surface of intermediate layer 4, and another substrate layer 22 provided on the rear surface of adhesive layer 61. Packaging film 1 in FIG. 4 further has a colorless and transparent ink layer 52 provided on the front surface of essential substrate layer 21 in packaging film 1 in FIG. 3. A colorless and transparent ink layer may be provided on the rear surface of other substrate layers 22 or the like though not shown particularly.

In each packaging film 1 in FIGS. 3 and 4, other substrate layer 22 corresponds to the covering layer. Although the first surface is the rear surface, the first surface may be the front surface. Essential substrate layer 21 and other substrate layers 22 may be constituted of different types of substrates, or may be constituted of the same type of substrates. In packaging film 1 in FIGS. 3 and 4, a transparent (colorless and transparent or colored transparent) substrate layer is used as essential substrate layer 21, and the colorless and transparent substrate layer is preferably used.

In this packaging film 1, transparent essential substrate layer 21 or essential substrate layer 21, and colorless and transparent ink layer 52 are laid on the front surface of aqueous colored ink layer 3. For this reason, the design of aqueous colored ink layer 3 can be confirmed visually at least from the front surface side of packaging film 1. In this case, the layers provided on the rear surface side of aqueous colored ink layer 3 (intermediate layer 4, adhesive layer 61, and other substrate layers 22) may be either transparent or opaque. For example, intermediate layer 4 is white.

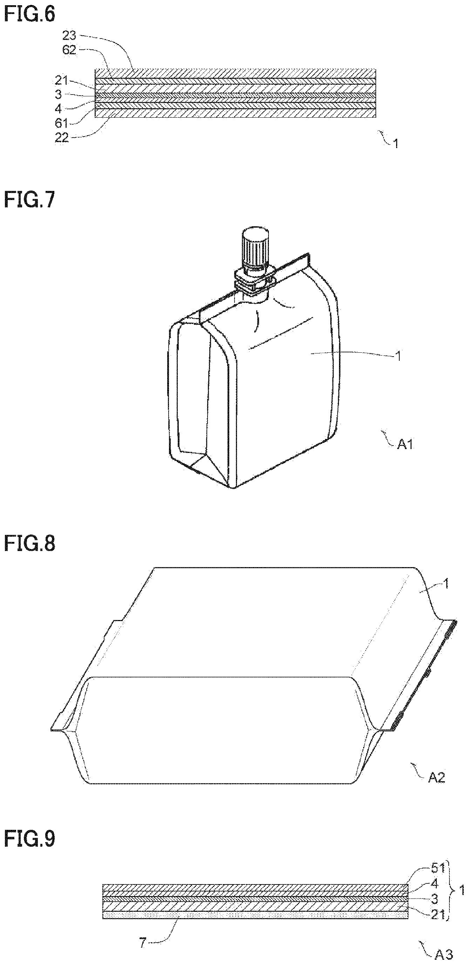

Each packaging film 1 in FIGS. 5 and 6 has three substrate layers. With reference to FIG. 5, packaging film 1 has essential substrate layer 21, aqueous colored ink layer 3 provided on the rear surface (in this example, the rear surface is the first surface) of essential substrate layer 21, intermediate layer 4 provided on the rear surface of aqueous colored ink layer 3, and adhesive layer 61 provided on the rear surface of intermediate layer 4, another first substrate layer 22 provided on the rear surface of adhesive layer 61, an adhesive layer 62 provided on the rear surface of other first substrate layer 22, and another second substrate layer 23 provided on the rear surface of adhesive layer 62. A colorless and transparent ink layer may be provided on the front surface of essential substrate layer 21, the rear surface of other second substrate layer 23, or the like though not shown particularly. In packaging film 1 in FIG. 5, a transparent (preferably colorless and transparent) substrate layer is used as essential substrate layer 21. In this case, the layers (intermediate layer 4, adhesive layers 61 and 62, and other substrate layers 22 and 23) provided on the rear surface side of aqueous colored ink layer 3 may be either transparent or opaque. For example, intermediate layer 4 is white.

Packaging film 1 in FIG. 6 has another second substrate layer 23, adhesive layer 62 provided on the rear surface (in this example, the rear surface is the first surface) of other second substrate layer 23, essential substrate layer 21 provided on the rear surface of adhesive layer 62, aqueous colored ink layer 3 provided on the rear surface of essential substrate layer 21, intermediate layer 4 provided on the rear surface of aqueous colored ink layer 3, adhesive layer 61 provided on the rear surface of intermediate layer 4, and another first substrate layer 22 provided on the rear surface of adhesive layer 61. A colorless and transparent ink layer may be provided on the front surface of other second substrate layer 23, the rear surface of other first substrate layer 22, or the like though not shown particularly. In packaging film 1 in FIG. 6, transparent (preferably colorless and transparent) substrate layers are used as both essential substrate layer 21 and other second substrate layer 23, and a transparent (preferably colorless and transparent) adhesive layer is used as adhesive layer 62. In this case, the layers (intermediate layer 4, adhesive layer 61, and other substrate layer 22) provided on the rear surface side of aqueous colored ink layer 3 may be either transparent or opaque. For example, intermediate layer 4 is white.

In each packaging film 1 in FIGS. 5 and 6, other first substrate layer 22 corresponds to the covering layer. Each or some of essential substrate layer 21 and other first substrate layers 22, and other second substrate layer 23 may be constituted of different types of substrates, or may be constituted of the same type of substrates. In each packaging film 1 in FIGS. 5 and 6, since essential substrate layer 21 or the like layered on the front surface side of aqueous colored ink layer 3 is transparent, the design of aqueous colored ink layer 3 can be confirmed visually at least from the front surface side of packaging film 1.

A packaging film may have four or more substrate layers though not shown particularly. The packaging film having four or more substrate layers is constituted by layering the plurality of substrate layers via adhesive layers. Transparent (preferably colorless and transparent) layers are preferably used as the layers layered nearer to the front surface or/and the rear surface of the packaging film than an aqueous colored ink layer provided on an essential substrate layer because this enables visually confirming the design of the aqueous colored ink layer provided on the essential substrate layer from the front surface or/and the rear surface of the packaging film.

### <Substrate layer>

In the packaging film of the present disclosure, the substrate layer may be either transparent (colorless and transparent or colored transparent) or opaque. A transparent substrate layer is preferably used. Examples of the substrate layer (essential substrate layer or other substrate layer) include resin layers, metal thin film layers, nonwoven fabric layers, and paper layers. Examples of the resin film include resin films containing a known resin as the main component. A colorless and transparent resin film is preferably used. Examples of the resin include polyester resins such as polyethylene terephthalate, polyethylene naphthalate, polybutylene terephthalate and polylactic acid; polyolefin resins such as polyethylene and polypropylene; polyamide resins such as 6-nylon, 66-nylon; polystyrene resins such as polystyrene; polycarbonate resins; nitrile resins such as polyacrylonitrile; imide resins such as polyimide; vinyl chloride resins such as polyvinyl chloride, polyvinylidene chloride; and acrylate resins such as polymethyl methacrylate. The resin layer may be a monolayer or multilayer. The monolayer or multilayer as the resin layer may be subjected to metal vapor deposition. The thickness of the resin layer (resin film) is not particularly limited, and is for example, 10 µm to 200 µm, and preferably 10 µm to 100 µm. Although the resin layer is usually a non-foamed layer, or may be foamed.

Examples of the metal thin film layers include aluminum foil and copper foil. The thickness of the metal thin film layer is not particularly limited, and is, for example, 5 µm to 30 µm. Examples of the nonwoven fabric layer include nonwoven fabrics obtained by making fibers into the shape of a sheet by an adhesion method, a needle punching method, a spun bonding method, a melt blowing method, or other methods. Examples of the fibers include polyester fibers; polyolefin fibers such as polypropylene and polyethylene; rayon fibers; polyamide fibers such as nylon; and natural fibers. The basis weight of a nonwoven fabric is not particularly limited, and is, for example, 10 to 100 g/m². Examples of the paper layers include plain paper and fine paper.

Since the polyvinylidene chloride resin layer and the metal thin film layers have gas barrier properties, the gas barrier properties can be imparted to the packaging film by using such a substrate layer having gas barrier properties. Since a low-density polyethylene layer, an ethylene-propylene copolymer layer, an ethylene-olefin copolymer layer, and the like have sealant properties (heat-weldablility), the sealant properties can be imparted to the packaging film by using a substrate layer having such sealant properties. Such a substrate layer having sealant properties is preferably disposed on the rearmost surface of the packaging film. Since polyester resin layers such as polyethylene terephthalate; and polyamide resin layers such as nylon are excellent in heat resistance in comparison with the substrate layer having the sealant properties, heat resistance can be imparted to the packaging film by using such a substrate layer having heat resistance. Such a substrate layer having heat resistance is preferably disposed on the frontmost surface of the packaging film. Since the foamed resin layers, the nonwoven fabric layers, and the like have heat-insulating properties, the heat-insulating properties can be imparted to the packaging film by using such a substrate layer having the heat-insulating properties.

When the resin layer is used as the essential substrate layer, it is preferably a resin layer having good wettability with an aqueous colored ink. Since polyester resin layers such as polyethylene terephthalate, and polyolefin resin layers such as polypropylene treated with corona, for example, hardly repel an aqueous colored ink, these resin layers can be suitably used as the essential substrate layer.

For example, when packaging film 1 having two substrate layers as shown in FIGS. 3 or 4 is used as a film for pouches, which forms pouch containers, or a film for pillow packaging, which forms a pillow packaging bag, for example, it is preferable to use a polyester resin layer as essential substrate layer 21 and use a resin layer such as a low-density polyethylene layer having sealant properties as other substrate layer 22. It is because the polyester resin layer has wettability and heat resistance, and the low-density polyethylene layer have sealant properties.

When packaging film 1 having three substrate layers as shown in FIG. 5 is used as a film for pouches, or a film for pillow packaging, for example, it is preferable to use a polyester resin layer as essential substrate layer 21, use a polyamide resin layer or the like as other first substrate layer 22, and use a resin layer such as a low-density polyethylene layer having sealant properties as other second substrate layer 23. When packaging film 1 having three substrate layers as shown in FIG. 6 is used as a film for pouches, or a film for pillow packaging, for example, it is preferable to use a polyester resin layer, a polyolefin resin layer treatment with corona, or the like as essential substrate layer 21, use the resin layer such as a low-density polyethylene layer having sealant properties as other first substrate layer 22, and use a resin layer including a polyamide resin layer such as nylon having heat resistance as other second substrate layer 23.

### <Aqueous colored ink layer>

The aqueous colored ink layer is provided at least on the first surface of the essential substrate layer. The aqueous colored ink layer can be formed on the first surface of an essential substrate layer by printing an aqueous colored ink using a conventionally known printing method.

The aqueous colored ink contains a coloring agent, an aqueous ink resin, and water, and may contain additives, another solvent such as an alcohol or a glycol, and the like if needed. It is preferable that the aqueous colored ink layer (aqueous colored ink) contain no curing agent having reactivity with the aqueous ink resin (binder resin). The expression "contain no curing agent" means that the aqueous colored ink layer does not contain any curing agent when the aqueous colored ink layer is formed and immediately after the aqueous colored ink layer is formed. As mentioned below, it is because after the intermediate layer containing the curing agent is formed on the aqueous colored ink layer, the curing agent of the intermediate layer permeates the aqueous colored ink layer gradually, and is bound to the aqueous ink resin.

The aqueous colored ink is an ink in which the aqueous ink resin (binder resin) and others are dissolved or dispersed in water (or in water and other solvents such as alcohols added if needed), and is preferably an aqueous emulsion type in which these are dispersed. The aqueous colored ink layer, which is a solidified film of the aqueous colored ink, is a layer which does not contain water (and other solvents such as alcohols added if needed) from the aqueous colored ink substantially.

The above-mentioned coloring agent is not particularly limited, and pigments such as inorganic pigments and organic pigments can be used. Examples of the inorganic pigments include carbon black, and metal oxides such as titanium dioxide, zinc oxide, silica, alumina, and magnesium oxide. Examples of the organic pigments include an azo pigment, a diazo pigment, a phthalocyanine pigment, a quinacridone pigment, an isoindolinone pigment, a dioxazine pigment, a perylene pigment, a perinone pigment, a thioindigo pigment, an anthraquinone pigment, and a quinophthalone pigment.

As the aqueous ink resin (binder resin in the aqueous colored ink layer), those having reactivity with the curing agent of the intermediate layer are used. A resin having a functional group which reacts with the functional group of the curing agent is used for such a binder resin. Hereinafter, the functional group of the binder resin (functional group having reactivity with the functional group of the curing agent) is referred to as a "functional group X", and the functional group of the curing agent is referred to as a "functional group Y".

Examples of the functional group X include, but not particularly limited to, a carboxyl group (also including a carboxylic anhydride), a hydroxyl group, an oxazoline group, an isocyanate group, an epoxy group, an amino group, an aziridine group, a carbodiimide group, a hydrosilyl group, a silanol group, a mercapto group, and a vinyl group. Especially, a carboxyl group, a hydroxyl group, an amino group, and a silanol group are preferable, and a carboxyl group is particularly preferable. The functional group X preferably causes no reaction between the functional groups X in an environment near normal temperature and normal pressure.

Examples of the binder resin having a carboxyl group (aqueous ink resin having the functional group X) include polyolefin resins having a carboxyl group such as polyethylene resins having a carboxyl group; acrylic resins having a carboxyl group; polystyrene resins having a carboxyl group (also including styrene having a carboxyl group-(meth)acrylic acid ester copolymer resins); urethane resins having a carboxyl group; polyester resins having a carboxyl group; polyamide resins having a carboxyl group; cellulose resins having a carboxyl group; vinyl chloride having a carboxyl groupvinyl acetate copolymer resins; isocyanate resins having a carboxyl group; and rosin resins having a carboxyl group. Especially, the polyolefin resins having a carboxyl group, the polystyrene resins having a carboxyl group, and the polyester resin having a carboxyl group are preferable, and the polyolefin resins having a carboxyl group and the polystyrene resin having a carboxyl group are more preferable.

Examples of the binder resin having a carboxyl group include resins comprising a monomer having a carboxyl group as an essential monomer component. Examples of the monomer having a carboxyl group include unsaturated carboxylic acids such as acrylic acid, methacrylic acid, crotonic acid, itaconic acid, fumaric acid, and maleic acid. The binder resin having a carboxyl group may comprise monomers besides the monomer having a carboxyl group as monomer components. As the binder resin having a carboxyl group, olefin-(meth)acrylic acid copolymers such as ethylene-(meth)acrylic acid copolymers; olefin-(meth)acrylic acid ester-(meth)acrylic acid copolymers such as ethylene-(meth)acrylic acid ester-(meth)acrylic acid copolymers; styrene-(meth)acrylic acid copolymers; and styrene-(meth)acrylic acid ester-(meth)acrylic acid copolymers are specifically preferable, and ethylene-(meth)acrylic acid copolymers and styrene-(meth)acrylic acid copolymers are more preferable.

Although the content of the aqueous ink resin in the aqueous colored ink layer is not particularly limited, the content is preferably 20% by weight to 70% by weight, and more preferably 25% by weight to 60% by weight based on the total weight (100% by weight) of the aqueous colored ink layer. Although the content of the coloring agent in the aqueous colored ink layer is not particularly limited, the content is preferably 1% by weight to 80% by weight, and more preferably 5% by weight to 75% by weight based on the total weight (100% by weight) of the aqueous colored ink layer. Especially when the aqueous colored ink layer includes a white background printing part, the white background printing part is formed of a white ink containing a white pigment such as titanium oxide, and in such a background printing part, a comparatively large amount of the coloring agent (white pigment) is contained. The thickness of the aqueous colored ink layer is not particularly limited, and is, for example, 1 µm to 5 µm.

### intermediate layer>

The intermediate layer is provided so as to cover at least the first surface of the aqueous colored ink layer. The intermediate layer can be formed on the first surface of the aqueous colored ink layer by applying an intermediate layer formation material using a known coating method such as a printing method.

The intermediate layer formation material may contain a binder resin (intermediate layer resin) and the curing agent, and may contain coloring agent, a suitable solvent, and additives if needed. When a colorless and transparent intermediate layer is formed, the intermediate layer formation material is preferably an ink containing the binder resin, the curing agent, and substantially no coloring agent. When a colored transparent or opaque intermediate layer is formed, the intermediate layer formation material is preferably an ink containing the binder resin, the curing agent, and the coloring agent. The intermediate layer itself (intermediate layer formed by using the intermediate layer formation material) contains substantially no solvent.

The curing agent in the intermediate layer has the functional group Y having reactivity with the aqueous ink resin having the functional group X. The curing agent may have reactivity with the functional group X of the aqueous ink resin at room temperature, or may have the reactivity by active energy rays such as ultraviolet rays and an electron beam, heat, humidity, or the like. The curing agent preferably has reactivity with the functional group X of the aqueous ink resin at room temperature.

Although the functional group Y can be suitably selected depending on the type of the functional group X, examples thereof include a carboxyl group (also including a carboxylic anhydride), a hydroxyl group, an oxazoline group, an isocyanate group, an epoxy group, an amino group, an aziridine group, a carbodiimide group, a hydrosilyl group, a silanol group, a mercapto group, and a vinyl group. It is preferable that the functional group X and the functional group Y be not the same functional groups. The curing agent may have one type of the functional group Y alone, or may have two or more types of the functional group Y. The functional group Y preferably causes no reaction between the functional groups Y in an environment near normal temperature and normal pressure.

The combination of the functional group X and the functional group Y is important. Examples of the combinations include a carboxyl group and an isocyanate group, a carboxyl group and an epoxy group, a carboxyl group and an aziridine group, a carboxyl group and a carbodiimide group, a carboxyl group and an oxazoline group, a hydroxyl group and an isocyanate group, a hydroxyl group and an aziridine group, a silanol group and an isocyanate group, an amino group and an isocyanate group, and an amino group and an epoxy group. A preferable combination of the functional group X and the functional group Y is a carboxyl group and an aziridine group, a carboxyl group and a carbodiimide group, or a hydroxyl group and an isocyanate group. A more preferable combination thereof is a carboxyl group and an aziridine group, or a carboxyl group and a carbodiimide group. A further preferable combination thereof is a carboxyl group and an aziridine group. In these combinations, the functional group X and the functional group Y may be reverse.

When the functional group X is a carboxyl group, examples of the curing agent include an isocyanate curing agent, an epoxy curing agent, an aziridine curing agent, a carbodiimide curing agent, and an oxazoline curing agent. Especially, the isocyanate curing agent and the aziridine curing agent are preferable, and the aziridine curing agent is more preferable. The curing agent may be used alone or in combination of two or more.

Examples of the isocyanate curing agent include aromatic compounds having two or more isocyanate groups (aromatic polyisocyanate compounds). Examples of the aromatic polyisocyanate compounds include known aromatic diisocyanates, and include 2,4-tolylene diisocyanate, 2,6-tolylene diisocyanate, 4,4'-diphenylmethane diisocyanate, xylylene diisocyanate, 1,3-phenylene diisocyanate, and 1,5-naphthalene diisocyanate. A tri- or more functional aromatic polyisocyanate or a polyisocyanate adduct can also be mixed with the aromatic diisocyanate and used if needed. The aromatic polyisocyanate compound may be used alone or in combination of two or more.

Examples of the aziridine curing agent include trimethylol propane tris[3-(1-aziridinyl)propionate], trimethylol propane tris[3-(1-(2-methyl)aziridinyl propionate)], N,N'-toluene-2,4-bis(1-aziridinecarboxide), N,N'-diphenylmethane-4,4'-bis(1-aziridinecarboxide), triethylene melamine, bis-isoprotaloyl-1-(2-methylaziridine), tri-1-aziridinyl phosphine oxide, tetramethylolmethane-tri-β-aziridinylpropionate, 2,2'-bis-hydroxymethyl butanol-tris[3-(1-aziridinyl)propionate], 1,6-hexamethylene diethylene urea, N,N'-diphenylmethane-4,4'-bis(1-aziridinecarboxyamide), and N,N'-hexamethylene-1,6-bis(1-aziridinecarboxyamide). The aziridine curing agent may be used alone or in combination of two or more. A commercial product can also be used as the aziridine curing agent. For example, the "CHEMITITE series" produced by NIPPON SHOKUBAI CO., LTD. is available on the market.

The curing agent may be water-soluble, or may be non-water-soluble (oilsoluble). The curing agent preferably has reactivity with the functional group X at room temperature (for example, at least partially in the range of 10 to 40°C, preferably at least partially in the range of 12 to 35°C, and more preferably at least partially in the range of 15 to 30°C). It is preferable that the curing agent have reactivity with the functional group X at room temperature, because such a curing agent can react with the aqueous ink resin rapidly to fully crosslink the aqueous ink resin. The curing agent is not limited to curing agents having reactivity with the functional group X at room temperature, and may have reactivity with the functional group X by active energy rays such as ultraviolet rays and an electron beam, heat, and humidity.

The intermediate layer resin may have a functional group having reactivity with the functional group Y of the curing agent, or may not have the functional group having reactivity with the functional group Y. The intermediate layer resin preferably has reactivity with the curing agent contained in the intermediate layer (in other words, the curing agent has reactivity with the intermediate layer resin). The intermediate layer containing the intermediate layer resin having reactivity with the curing agent becomes firm by crosslinking the intermediate layer resin with the curing agent. Moreover, since the aqueous ink resin is crosslinked with the curing agent as mentioned above, the bond between the aqueous ink resin (the binder resin of the aqueous colored ink layer) and the intermediate layer resin (the binder resin of the intermediate layer) is enhanced via the curing agent, and the interlayer adhesion between the intermediate layer and the aqueous colored ink layer is improved.

Examples of the functional group of the intermediate layer resin (the functional group having reactivity with the functional group Y of the curing agent) include functional groups listed as the functional group X. As the combination of the functional group of the intermediate layer resin and the functional group Y, the combinations listed as the preferable combinations of functional group X and functional group Y are preferable. Therefore, as the intermediate layer resin, a resin as described for the aqueous ink resin having above-mentioned functional group X can be suitably selected and used, for example.

Although the content of the curing agent in the intermediate layer is not particularly limited, the content is preferably 1% by weight to 50% by weight, more preferably 3% by weight to 45% by weight, and further preferably 5% by weight to 35% by weight based on the total weight (100% by weight) of the intermediate layer. Although the content of intermediate layer resin in the intermediate layer is not particularly limited, the content is preferably 40% by weight to 90% by weight, and more preferably 50% by weight to 90% by weight based on the total weight (100% by weight) of the intermediate layer. The thickness of the intermediate layer is not particularly limited, for example, the thickness is 1 µm to 5 µm.

### <Covering layer>

The covering layer is provided so as to cover at least the intermediate layer. In one embodiment, the covering layer comprises a substrate layer. That is, another substrate layer is provided on the first surface of the intermediate layer as the covering layer. As described hereinbefore in the section <Substrate layer>, examples of the other substrate layer as the covering layer include resin layers, metal thin film layers, nonwoven fabric layers, and paper layers. A colorless and transparent resin film is preferably used. In another embodiment, the covering layer comprises a colorless and transparent ink layer. That is, a colorless and transparent ink layer is provided on the first surface of the intermediate layer as the covering layer. The colorless and transparent ink layer can be formed by printing an ink containing substantially no coloring agent (so-called medium ink) on the first surface of the intermediate layer. The colorless and transparent ink layer may contain a lubricating component and the like. The thickness of the colorless and transparent ink layer is not particularly limited, and is, for example, 1 µm to 5 µm.

### <Adhesive layer>

The adhesive layer is, for example, a layer which lies between two substrate layers, and adheres the two substrate layers. As long as the adhesive layer can adhere the two layers between which the adhesive layer lies, the adhesive layer is not particularly limited. A known adhesive can be used. For example, as the adhesive layer, a so-called dry lamination adhesive such as an adhesive having resolvent volatility, a solventless adhesive, an anchor coat agent, or the like can be used. The thickness of the adhesive layer is not particularly limited, and is, for example, 1 µm to 10 µm.

### <Use of packaging film>

The packaging film of the present disclosure can usually be used as a soft wrapping material, a label, or the like in the same manner as for known packaging films. The packaging film of the present disclosure is typically processed, for example, into a soft wrapping material such as a pouch container or a pillow packaging bag, and used. The soft wrapping material is a soft wrapping material for wrapping various articles. The soft wrapping material formed by using the packaging film of the present disclosure are preferably those for wrapping articles hermetically, and examples of such a soft wrapping material include pouch containers and pillow packaging bags.

FIG. 7 shows an example of a pouch container A1 formed by using packaging film 1, and FIG. 8 shows an example of a pillow packaging bag A2 formed by using packaging film 1. The packaging film forming a pouch container, a pillow packaging bag, and the like is preferably a packaging film in which a substrate layer having sealant properties is disposed on the rearmost surface.

FIG. 9 shows an example of a label A3 formed by using packaging film 1. Label A3 in FIG. 9 is a so-called pressure sensitive adhesive label wherein a pressure sensitive adhesive layer 7 is provided on the rear surface (for example, the second surface) of packaging film 1, and the pressure sensitive adhesive label is obtained by punching out it in a desired plane view shape. Although FIG. 9 illustrates a case where packaging film 1 shown in FIG. 2 is processed to manufacture label A3, the packaging film to be used is not necessarily limited to packaging film 1 shown in FIG. 2. Although FIG. 9 illustrates an embodiment of a label in which pressure sensitive adhesive layer 7 is provided on the rear surface (pressure sensitive adhesive label), the packaging film may be processed into labels provided with no pressure sensitive adhesive layers (for example, neck labels).

### <Effect>

In the packaging film of the present disclosure, the intermediate layer containing the curing agent having reactivity with the binder resin in the aqueous colored ink layer is provided on the first surface of the aqueous colored ink layer. When this curing agent of the intermediate layer is bound to the aqueous ink resin, the aqueous ink resin is crosslinked. The curing agent in the intermediate layer permeates the ink layer gradually by layering the intermediate layer on the first surface of the aqueous colored ink layer directly, and the curing agent and the aqueous ink resin react to crosslink the aqueous ink resin. With increase in the degree of crosslinking, the water resistance of the aqueous ink resin is improved, and the sticking tendency to the substrate layer is also improved. For this reason, the aqueous colored ink layer according to the present disclosure is excellent in both characteristics of water resistance and sticking tendency to the substrate layer. Accordingly, since the aqueous colored ink layer is excellent in water resistance, the aqueous colored ink layer hardly falls off. Moreover, the aqueous colored ink layer is excellent in sticking tendency to the substrate layer, and hardly peels off the substrate layer.

Especially when the curing agent has reactivity also with the binder resin contained in the intermediate layer, the aqueous colored ink layer and the intermediate layer are firmly bound, and therefore, the aqueous colored ink layer is consequently firmly protected by the intermediate layer. When the curing agent is directly incorporated into the aqueous colored ink layer (the curing agent is blended in the aqueous colored ink, and the aqueous colored ink layer is formed of the aqueous colored ink), it is feared that the aqueous colored ink layer to be formed does not attach (stick) to the substrate layer with enough strength because the curing agent and the aqueous ink resin react to rapidly form gels of the aqueous colored ink. Therefore, it is preferable that, in the packaging film of the present disclosure, the aqueous colored ink layer contain no curing agent. As mentioned above, the expression "contain no curing agent" here means that the aqueous colored ink layer does not contain any curing agent when the aqueous colored ink layer is formed and immediately after the aqueous colored ink layer is formed. In other words, that expression means that no curing agent is contained in a resin composition for forming an aqueous colored ink layer.

It is preferable that, in the packaging film of the present disclosure, the aqueous colored ink layer be adjacent to the substrate layer and the intermediate layer, and, in other words, be in direct contact with the substrate layer and the intermediate layer. It is because the effect due to the above-mentioned curing agent can be exhibited more remarkably. In any of FIGS. 2 to 6 and FIG. 9, the aqueous colored ink layer is adjacent to the substrate layer and the intermediate layer, and in FIGS. 3 to 6, the adhesive layer is provided between the covering layer and the intermediate layer as another layer.

### EXAMPLE

Hereinafter, the present disclosure will be further detailed by illustrating Examples and Comparative Examples. However, the present disclosure is not limited to the following Examples.

### [Example 1]

The viscosity of an acrylic aqueous colored ink (produced by SAKATA INX CORPORATION, trade name "Ecopure SR Indigo Blue 800PR-2") was adjusted with water so that gravure printing was enabled. Then, the acrylic aqueous colored ink (indigo blue) after viscosity adjustment was subjected to solid printing on a polyethylene terephthalate film (12 µm in thickness, manufactured by TOYOBO CO., LTD., trade name "E5100") as an essential substrate layer using a gravure printing machine, and dried, whereby an indigo blue aqueous colored ink layer having a thickness of around 1 µm after drying was formed. The aqueous colored ink layer formed was in a rectangular shape of length × width = 350 mm × 80 mm in plane view.

Then, the viscosity of an acrylic aqueous colored ink (produced by SAKATA INX CORPORATION, trade name "Ecopure SR white 115") was adjusted with water so that gravure printing was enabled. Next, the acrylic aqueous colored ink (white) after viscosity adjustment was subjected to solid printing on the indigo blue aqueous colored ink layer using a gravure printing machine, and dried, whereby the white aqueous colored ink layer having a thickness of around 1 µm after drying was formed so as to be laid on the front surface of the indigo aqueous colored ink layer.

As intermediate layer formation materials, 5 parts by weight of an aziridine crosslinking agent (produced by NIPPON SHOKUBAI CO., LTD., trade name "CHEMITITE PZ-33") and 100 parts by weight of an acrylic medium ink (produced by DIC Graphics Corporation, trade name "Finewrap WPV Inner coat varnish F", resin content: 30% by weight, additive content: 3% by weight) were mixed, and the viscosity was adjusted with a resolvent (resolvent for the trade name "Finewrap WPV" produced by DIC Graphics Corporation) so that gravure printing was enabled. The above-mentioned aziridine crosslinking agent included an aziridine curing agent having an aziridine group. Then, the material for forming an intermediate layer after viscosity adjustment was subjected to solid printing on the front surface of the white aqueous colored ink layer using a gravure printing machine, and dried, whereby an intermediate layer having a thickness of around 1 µm after drying was formed. The content of the aziridine curing agent in the intermediate layer was 13% by weight based on the amount of solid contents, and the content of the aziridine curing agent in the intermediate layer was 17% by weight based on the total amount of resin.

Thus, a first sample composed of the substrate layer (polyethylene terephthalate film) / the aqueous colored ink layers (aqueous indigo blue ink layer + aqueous white ink layer) / the intermediate layer (medium ink layer) sequentially from the rear surface side was manufactured. Several sheets of the first sample were manufactured in the same way as above in order to subject to the tests mentioned blow.

One sheet of the first sample was taken out, and an adhesive for dry lamination (produced by DIC Graphics Corporation, the trade name of a base resin "DICDRY LX-500", the trade name of a curing agent "KW-75") was subjected to solid coating on the front surface of the intermediate layer of the first sample to form an adhesive layer having a thickness of around 3 µm. A nylon film (15 µm in thickness, trade name "N1200" of TOYOBO CO., LTD.) as a covering layer (substrate layer) was pasted on the front surface of this adhesive layer. Thus, a second sample composed of the substrate layer (polyethylene terephthalate film) / the aqueous colored ink layers (aqueous indigo blue ink layer + aqueous white ink layer) / the intermediate layer (medium ink layer) / the adhesive layer / the covering layer (nylon film) sequentially from the rear surface side was manufactured.

### [Example 2]

A first sample and a second sample were each manufactured in the same way as in Example 1 except that an intermediate layer was formed by using an acrylic white ink containing a white pigment (produced by DIC Graphics Corporation, trade name "Finewrap WPV 709 white N04 (PS)") instead of the acrylic medium ink in the intermediate layer formation material of Example 1. The content of the aziridine curing agent in the intermediate layer was 8% by weight based on the amount of solid contents, and the content of the aziridine curing agent in the intermediate layer was 25% by weight based on the total amount of resin.

### [Example 3]

A first sample and a second sample were each manufactured in the same way as in Example 1 except that 2 parts by weight of the aziridine crosslinking agent and 100 parts by weight of the acrylic medium ink were mixed in the intermediate layer formation material of Example 1. The content of the aziridine curing agent in the intermediate layer was 6% by weight based on the amount of solid contents, and the content of the aziridine curing agent in the intermediate layer was 7% by weight based on the total amount of resin.

### [Example 4]

A first sample and a second sample were each manufactured in the same way as in Example 1 except that 8 parts by weight of the aziridine crosslinking agent and 100 parts by weight of the acrylic medium ink were mixed in the intermediate layer formation material of Example 1. The content of the aziridine curing agent in the intermediate layer was 20% by weight based on the amount of solid contents, and the content of the aziridine curing agent in the intermediate layer was 27% by weight based on the total amount of resin (100% by weight).

### [Example 5]

A first sample and a second sample were each manufactured in the same way as in Example 1 except that the type of the binder resin contained in the aqueous colored ink layer and the type of the curing agent contained in the intermediate layer were changed.

Specifically, when an indigo blue aqueous colored ink layer was formed, 100 parts by weight of the acrylic aqueous colored ink (produced by SAKATA INX CORPORATION, trade name "Ecopure SR Indigo Blue 800PR-2") and 5 parts by weight of the aqueous acrylic resin were mixed, and the viscosity was moreover adjusted with water so that gravure printing was enabled. When a white aqueous colored ink layer was formed, 100 parts by weight of the acrylic aqueous colored ink (produced by SAKATA INX CORPORATION, trade name "Ecopure SR white 115") and 5 parts by weight of the aqueous acrylic resin were mixed, and the viscosity was moreover adjusted with water so that gravure printing was enabled. Mixing the respective acrylic aqueous colored inks and the aqueous acrylic resin was carried out by adding an aqueous solution containing the aqueous acrylic resin to the acrylic aqueous colored ink stirred and further stirring the mixture for 30 minutes.

In the intermediate layer formation material, 5 parts by weight of a carbodiimide crosslinking agent (produced by Nisshinbo Chemical Inc., trade name "CARBODILITE E-02") was used instead of 5 parts by weight of the aziridine crosslinking agent. The above-mentioned carbodiimide crosslinking agent contains 40% by weight of a carbodiimide curing agent having a carbodiimide group. The content of the carbodiimide curing agent in the intermediate layer was 6% by weight based on the amount of solid contents, and the content of the carbodiimide curing agent in the intermediate layer was 7% by weight based on the total amount of resin.

### [Comparative Example]

A first sample and a second sample were each manufactured in the same way as in Example 1 except the intermediate layer was not formed.

### [Reference Example]

When a suitable amount of the above-mentioned aziridine crosslinking agents were added to the acrylic aqueous colored ink (produced by SAKATA INX CORPORATION, trade name "Ecopure SR Indigo Blue 800PR-2") in Example 1, the viscosity increased rapidly. Although it was attempted to adjust the viscosity by adding water, only an aqueous colored ink which had high viscosity and was thus unsuitable for gravure printing was obtained. When this ink was subjected to solid printing on a polyethylene terephthalate film (12 µm in thickness, manufactured by TOYOBO CO., LTD., trade name "E5100") in the same way as in Example 1 using a gravure printing machine, and dried, only an ink layer which was blurred in places was formed.

### [Tape peeling test (peeling resistance)]

The peeling resistance was tested according to JIS K 5600-5-6 except a cross-cut grid was not made in a sample. Specifically, pressure sensitive adhesive tape having a width of 18 mm (manufactured by NICHIBAN Co., Ltd., trade name "CELLOTAPE (R)") was stuck on the front surface of the intermediate layer, this pressure sensitive adhesive tape was peeled in a direction of 60 degrees, the surface of the pressure sensitive adhesive tape was observed visually, and the first sample of Example 1 was evaluated by the following criteria in a standard state (23°C, 1 atm, 50% RH). The first samples of Example 2 and Comparative Example were tested for peeling resistance in the same way. The first samples of Examples and Comparative Example were stored in a standard state (23°C, 1 atmosphere, 50% RH) for around 24 hours after manufacturing until the tests.
Table 1 shows the results.

A: No ink attachment was observed on the pressure sensitive adhesive tape, and the exfoliation of the ink was not observed.

F: A large amount of ink attachments were observed on pressure sensitive adhesive tape, and the rate of the area of the ink exfoliation on the sample was 30% or more. The area of the ink exfoliation can be calculated by finding (total area of regions in which ink was exfoliated/area of ink layer before sticking of tape) × 100.

### [Blocking test]

Two first samples of Example 1 were taken out. On one first sample, the other first sample was laid so that the front surface of the intermediate layer of the one first sample contacted with the rear surface of the substrate layer of the other first sample, and the two first samples were stored under the conditions of 40°C and 80% RH for 24 hours with a pressure of 0.2 MPa applied to the front surface of the other first sample. Then, the other first sample was peeled. The rear surface of the substrate layer of the other first sample was observed visually, and the first samples were evaluated by the following criteria. The first samples of Example 2 and Comparative Example were tested in the same way. The first samples of Examples and Comparative Example were stored in a standard state (23°C, 1 atmosphere, 50% RH) for around 24 hours after manufacturing until the tests. Table 1 shows the results.

A: The other first sample was peeled without resistance, and no substance attached was observed on the rear surface of the substrate layer.

F: The other first sample was peeled by pulling the other first sample strongly, and a large amount of ink attachments were observed on the rear surface of the substrate layer.

### [Immersion test]

The first sample of Example 1 was cut into 50 mm × 50 mm to manufacture a specimen. The specimen was placed in a sealable container, tap water at 40°C having a volume for immersing the specimen fully was poured into the container, and the container was then sealed and left to stand for 24 hours with the temperature maintained at 40°C. Then, the specimen was taken out of the container. While tap water at normal temperature was poured on the specimen, the front surface of the intermediate layer was rubbed with the inner surfaces of fingers lightly and washed. The state of the front surface of the intermediate layer was then observed visually and evaluated by the following criteria. Also, specimens were tested in the same way except that an aqueous acid solution having a concentration of 1.0% by weight at 40°C and an aqueous alkali solution having a concentration of 1.0% by weight at 40°C were each used instead of tap water at 40°C. The first samples of Example 2 and Comparative Example were also tested in the same way (however, since Comparative Example did not have an intermediate layer, the front surface of the aqueous colored ink layer was washed with fingers). The first samples of Examples and Comparative Example were stored in a standard state (23°C, 1 atmosphere, 50% RH) for around 24 hours after manufacturing until the tests. Table 1 shows the results.

A: The aqueous colored ink layer was not exfoliated, and the coloring of the ink layer did not change.

F: The aqueous colored ink layer was exfoliated, and the coloring of the ink layer became lighter.

### [Lamination strength test]

The second sample of Example 1 was tested for the peel strength between the substrate layer (polyethylene terephthalate film) and the covering layer (nylon film) in accordance with JIS Z 0238 using the precision universal tester. The test was carried out at a pulling speed of 300 mm/min using an autograph AG-X plus 500N (manufactured by SHIMADZU CORPORATION) as the precision universal tester. The second samples of Examples and Comparative Example were stored in a standard state (23°C, 1 atmosphere, 50% RH) for around 24 hours after manufacturing until the tests. Table 1 shows the results.

**[Table 1]**

| | | Example | | | | | Comparative Example |
|---|---|---|---|---|---|---|---|
| | | 1 | 2 | 3 | 4 | 5 | |
| Tape peeling test | | A | A | A | A | A | F |
| Blocking test | | A | A | A | A | A | F |
| Immersion test | Water | A | A | A | A | A | F |
| | Acid | A | A | A | A | A | A |
| | Alkali | A | A | A | A | A | A |
| Lamination strength (N) | | 4.1 | 4.5 | 4.6 | 4.2 | 31.0 | 1.7 |

It was confirmed from Table 1 that the films in Examples 1 to 4, in which the aziridine curing agent was used as the curing agent, achieved good results in the tape peeling test, the blocking test, and the immersion test, and that these films sufficiently function as packaging films. From the results of the lamination strength test, it was confirmed that the second samples of Examples 1 to 4 had a lamination strength of 4 or more. The reason for this is considered as follows: the aziridine curing agent in the intermediate layer permeated the aqueous colored ink layer gradually, and the aziridine curing agent and the binder resin in the aqueous colored ink layer reacted. It is because the aziridine curing agent, and the binder resin in the aqueous colored ink layer contain many aziridine groups as the functional group Y and many carboxyl groups as the functional group X, respectively.

It was also confirmed that the film in Example 5, in which the carbodiimide curing agent was used as the curing agent, achieved good results in the tape peeling test, the blocking test, and the immersion test were good, and that this film sufficiently functions as a packaging film. It was confirmed from the result of the lamination strength test that the second sample of Example 5 had a lamination strength of 31. The reason for this is considered as follows: the carbodiimide curing agent and the binder resin in the aqueous colored ink layer, especially the aqueous acrylic resin, reacted satisfactorily. It is because the carbodiimide curing agent, and the binder resin in the aqueous colored ink layer contain many carbodiimide groups as the functional group Y and many carboxyl groups as the functional group X, respectively.

### REFERENCE SIGNS LIST

- 1:: Packaging film
- 21:: Substrate layer provided with aqueous colored ink layer
- 22:: Another substrate layers (covering layer)
- 3:: Aqueous colored ink layer
- 4:: Intermediate layer
- 51:: Colorless and transparent ink layer (covering layer)

## Claims

1. A packaging film comprising a substrate layer, an aqueous colored ink layer, an intermediate layer, and a covering layer layered in this order,
wherein the aqueous colored ink layer comprises a binder resin and a coloring agent, and
the intermediate layer comprises a curing agent having reactivity with the binder resin in the aqueous colored ink layer.

2. The packaging film according to claim 1, wherein the aqueous colored ink layer is adjacent to the substrate layer and the intermediate layer.

3. The packaging film according to claim 1 or claim 2, wherein
the intermediate layer further comprises a binder resin, and
the curing agent has reactivity with the binder resin of the intermediate layer.

4. The packaging film according to any one of claims 1 to 3, wherein the covering layer comprises another substrate layer, and is adhered to the intermediate layer via an adhesive layer.

5. The packaging film according to any one of claims 1 to 3, wherein the covering layer comprises a colorless and transparent ink layer.

6. A pouch container formed by using the packaging film according to any one of claims 1 to 5.
